# EUROPÄISCHE PATENTSCHRIFT

(11) **EP 1 808 729 B1**
(45) Veröffentlichungstag und Bekanntmachung des Hinweises auf die Patenterteilung: **22.04.2009**
(21) Anmeldenummer: 06000931.3
(22) Anmeldetag: 17.01.2006
(51) Int. Cl.: G03B 17/14, G03B 17/18, G03B 7/20, G02B 7/14

(54) **Wechselobjektiv mit optisch lesbarer Kennung**
Interchangeable lens with optically readable identification
Objectif interchangeable pourvu d'une identification lisible optiquement

(43) Veröffentlichungstag der Anmeldung: 18.07.2007
(73) Patentinhaber: Leica Camera AG, 35606 Solms (DE)
(72) Erfinder: Denk, Robert, 35619 Braunfels (DE); Kranz, Gerhard, 35576 Wetzlar (DE); Zielberg, Oliver, 35582 Wetzler (DE); Lies, Ulrich, 35578 Wetzlar (DE)
(74) Vertreter: Stamer, Harald

(56) Entgegenhaltungen:
- DE-A1- 3 438 322
- DE-A1- 3 443 443
- DE-A1- 19 612 683
- US-A- 5 061 952
- US-A- 5 122 822

## Beschreibung

Die Erfindung betrifft ein Wechselobjektiv mit den Merkmalen des Oberbegriffs des Patentanspruchs 1.

Solche Wechselobjektive können mit Hilfe einer üblicherweise als Bajonettverbindung ausgebildeten Anriegelvorrichtung an eine Systemkamera, beispielsweise eine Spiegelreflexkamera oder eine Messsucherkamera angerenkt werden. Die Wechselobjektive verfügen oftmals über elektrische Verbraucher, wie automatische Fokus- und Blendenverstellungsmechanismen. Aus diesem Grund weisen die Bajonettverbindungen mehrere elektrische Kontakte, einerseits zur Stromversorgung der elektrischen Verbraucher und andererseits zur Übertragung von Signalen zwischen Objektiv und Kameragehäuse auf. Diese Vielzahl oftmals dicht nebeneinander angeordneter elektrischer Kontakte ist störanfällig. Beispielsweise kann es beim Anrenken eines Objektivs an das Kameragehäuse zu unerwünschten elektrischen Verbindungen zwischen Kontakten kommen, die nicht miteinander verbunden werden sollen. Zur Vermeidung dieser Probleme ist aus EP 1 006 397 B1 bekannt, die Signalübertragung von der Stromversorgung zu trennen, indem zur kontaktlosen optischen Signalübertragung Optokoppler verwendet werden. Unerwünschte Kurzschlüsse zwischen Signalanschlüssen und Stromversorgungsanschlüssen des Objektivs und des Kameragehäuses beim Einrenken des Objektivs werden auf diese Weise sicher verhindert.

Aus DE 34 38 322 A1 ist ein Verfahren zur optischen Übertragung von Signaldaten zwischen Objektiv und Kamera bei Systemkameras bekannt. Hierbei wird eine definierte Strahlung erzeugt, die entsprechend wenigstens einer mechanischen Stellgröße in mindestens einer ihrer Eigenschaften variiert und dann in ein elektrisches Signal gewandelt wird, das zum Anzeigen der Stellgröße und/oder zum Steuern von Kamerafunktionen benutzt wird. Hierfür enthält das Kameragehäuse Mittel zur Erzeugung einer definierten Strahlung, während das Objektiv innenliegend aufwändige optische Mittel zur Aufnahme und zum Leiten dieser Strahlung sowie zu deren Rückführung zum Kameragehäuse aufweist. Das Objektiv ist zusätzlich mit Mitteln ausgerüstet, die die genannte Strahlung entsprechend wenigstens einer mechanischen Stellgröße in mindestens einer ihrer Eigenschaften variieren, Im Kameragehäuse sind Mittel zur Auswertung dieser Variationen der Strahlung im Hinblick auf die Anzeige der Stellgröße und/oder die Steuerung von Kamerafunktionen vorgesehen. Die Anordnung hat einen großen Platzbedarf, viele Einzelbauteile und die Stabilität des objektivseitigen Bajonettaufsatzes wird aufgrund der Lichtdurchtrittsöffnungen negativ beeinflusst. Ein nachträgliches Ausrüsten bestehender Objektive ist ausgeschlossen, beziehungsweise nur mit erheblichem Aufwand möglich.

Eine weitere Einrichtung mit optischer Erfassung von Signaldaten lässt sich DE 34 43 443 A1 entnehmen. Die während des Anrenkens des Objektivs zwangsläufig auftretende Relativbewegung von Objektivfassung und Kamerakörper zueinander wird genutzt, um eine optisch lesbare Skalierung in Form eines Strichcodes am Aufnahmeobjektiv erfassen zu können. Die Erfassung des Strichcodes ist ausschließlich während des Anrenkvorgangs möglich. Da die Leseeinrichtung immer genau während des Anrenkvorgangs betriebsbereit sein muss, dieser Zeitpunkt aber nicht bekannt ist, sind Fehlfunktionen beim Erfassen der Skalierung nicht auszuschließen. Die Erfassung eines Strichcodes eines bereits angerenkten Objektivs, beispielsweise nach dem Einschalten der Kamera, ist nicht möglich.

Aus DE 196 12 683 A1 ist ein Wechselobjektiv mit Anriegelvorrichtung für Systemkameras bekannt. Auf der Auflagefläche des Wechselobjektivs an der Kamera ist ein Strichcode zur Angabe des maximalen und minimalen Blendeneinstellwertes des Wechselobjektivs angebracht. Der Strichcode besteht aus einer Abfolge von unterschiedlich breiten und unterschiedlich beabstandeten Streifen. Kameraseitig befindet sich in der Auflagefläche ein Strichcodeleser. Beim Anriegeln des Wechselobjektivs wird der Strichcode am Strichcodeleser vorbeigeführt. Dieser erzeugt ein serielles elektrisches oder elektronisches Signal mit unterschiedlichen Pulsdauern durch Abtasten des Strichcodes mit gleichförmiger oder gleichmäßiger Geschwindigkeit. Der Strichcodeleser muß bereits vor dem Anriegeln des Wechselobjektivs aktiviert werden.

Der Erfindung lag daher die Aufgabe zugrunde, eine kontaktlose Erkennung von Wechselobjektiven bei Systemkameras zu ermöglichen, die einfach und zuverlässig im Ruhezustand des Objektivs auslesbar ist, an bestehenden Wechselobjektiven leicht nachrüstbar ist und die Zuordnung zu bestimmten Objektivtypen eines Kamerasystems auch zu Servicezwecken ermöglicht.

Diese Aufgabe wird bei einem Wechselobjektiv der eingangs genannten Art erfindungsgemäß durch die kennzeichnenden Merkmale des Anspruchs 1 gelöst. Vorteilhafte Ausgestaltungen und Verwendungen der Erfindung ergeben sich aus den Merkmalen der weiteren Ansprüche.

Wechselobjektive werden zur Befestigung an Systemkameras mit Hilfe einer Orientierungsmarkierung rotatorisch gegenüber der Kamera ausgerichtet und mit der Auflagefläche ihrer Anriegelvorrichtung auf die Bajonettaufnahme der Kamera aufgesetzt. Durch eine Drehbewegung wird das Objektiv an der Kamera angerenkt und ein Rastschloss der Bajonettaufnahme an der Kamera rastet in die Rastvertiefung des Objektivs ein. Auf diese Weise wird die reproduzierbare rotatorische Ausrichtung eines jeden Wechselobjektivs des Kamerasystems zur Bajonettaufnahme der Kamera sichergestellt. Üblicherweise sind die Anriegeivorrichtungen von Wechselobjektiven mit Hilfe einer Vielzahl von mehr oder weniger regelmäßig auf dem Umfang der Auflagefläche verteilten Befestigungsschrauben am Objektivtubus befestig. In Bezug auf die Rastvertiefung befinden sich jedoch die Befestigungsschrauben konstruktionsbedingt bei verschiedenen Objektivtypen an verschiedenen Positionen auf dem Umfang der Auflagefläche und stören die Homogenität der Auflagefläche. In Hinblick auf die Nachrüstbarkeit vorhandener Objektive und um eine möglichst hohe Kompatibilität zu gewährleisten, hat es sich als besonders vorteilhaft erwiesen, auf der Auflagefläche der Anriegelvorrichtung entgegen der Drehrichtung der Anrenkbewegung in einem Winkelsegments von 100° bis 160° beabstandet zur Rastvertiefung optisch einzeln detektierbare Flächenbereiche vorzusehen. Platzsparend und besonders zuverlässig detektierbar sind in besonders vorteilhafter Weise zwei bis sechs solcher Flächenbereiche nebeneinander in einem engeren Winkelsegment-Bereich von 110° bis 150° angeordnet. Die optisch einzeln detektierbaren Flächenbereiche können sich somit bei verschiedenen Objektivtypen immer zwischen den Befestigungsschrauben befinden und liegen gegenüber dem Kamerabajonett bezüglich des Rastschlosses immer im gleichen Winkelbereich. Auf diese Weise ist eine einfache und zuverlässige Zuordnung der Flächenbereiche zu kameraseitigen Auslesevorrichtungen möglich.

Eine besonders einfache und sicher detektierbare Ausführung der Flächenbereiche besteht darin, diese mit einer lichtreflektierenden oder lichabsorbierenden Beschichtung zu versehen. Auf diese Weise wird eine binäre Codierung ermöglicht und zur Detektierung können kostengünstige und einfach aufgebaute Reflexlichtschranken verwendet werden. Eine Beschichtung der Flächenbereiche aus einer hellen oder dunklen Chromschicht bietet eine besonders gute Detektierbarkeit und hält der mechanischen Beanspruchung bei An- und Abrenkvörgängen gut Stand.

Auf besonders einfache Weise, können bei vorhandenen Objektiven die detektierbaren Flächenbereiche nachträglich in Form einer hellen oder dunklen Lackschicht hergestellt werden.

Ebenso einfach sind bei vorhandenen Objektiven, die bereits eine helle und damit lichtreflektierende Auflagefläche an der Anriegelvorrichtung aufweisen, die lichtabsorbierenden Flächenbereiche durch Einbrennerhitzung mit Lasergravur, durch chemisches Ätzen oder Sandstrahlen herstellbar. Ein Austausch der Anriegelvorrichtung gegen eine mit einer Codierung versehene Anriegelvorrichtung, ist in diesem Fall nicht nötig. Das Nachrüsten vorhandener Objektive ist auf diese Weise besonders kostengünstig realisierbar.

Zur besonders flexiblen Handhabung bei der Nachrüstung verschiedenster vorhandener Objektivtypen können Anriegelungsvorrichtungen einzeln bevorratet werden. Zur flexiblen Herstellung optisch einzeln detektierbarer Flächenbereiche sind diese als Vertiefungen in der Auflagefläche ausgebildet. Die Herstellung der Vertiefungen mittels Lasergravur oder Fräsen hat sich als besonders vorteilhaft erwiesen, um eine homogene Struktur der Oberfläche der zu detektierenden Flächenbereiche sicherzustellen. Die zum Schutz der überwiegend aus Messing hergestellten Anriegelungsvorrichtungen in einem abschließenden Arbeitsgang aufgebrachte helle Chromschicht kann in vorteilhafter Weise für die lichtreflektierende Eigenschaft genutzt werden. In besonders einfacher Weise ist dann die lichtabsorbierende Eigenschaft durch Einbringen einer lichtabsorbierendem Lackschicht herstellbar. Die lichtreflektierende oder lichtabsorbierende Eigenschaft bleibt aufgrund der Vertiefungen auch unter den starken Beanspruchungen beim An- und Abrenken des Objektivs auf die Bajonettaufnahme der Kamera zuverlässig erhalten.

Ein weiterer Vorteil der Erfindung besteht darin, die Flächenbereiche in der Auflagefläche der Anriegelungsvorrichtung zur Codierung von Objektivgrunddaten, wie zum Beispiel Brennweite und Öffnungsverhältnis zu verwenden. Ebenso können aber auch individuelle, jedem einzelnen Objektiv zuzuordnende Daten, wie beispielsweise Korrekturwerte für Servicezwecke codiert werden.

Die Erfindung wird nachfolgend anhand eines in der Zeichnung schematisch dargestellten Ausführungsbeispiels beschrieben und näher erläutert.

Dabei zeigen:
- Fig. 1: ein Wechselobjetctiv mit Anriegelungsvorrichtung,
- Fig. 2: eine Anriegelungsvorrichtung in Aufsicht,
- Fig. 3: eine Schnittdarstellung durch einen optisch detektierbaren Flächenbereich und

Fig. 4 einen Flächenbereich mit lichtabsorbierendem Lackauftrag.

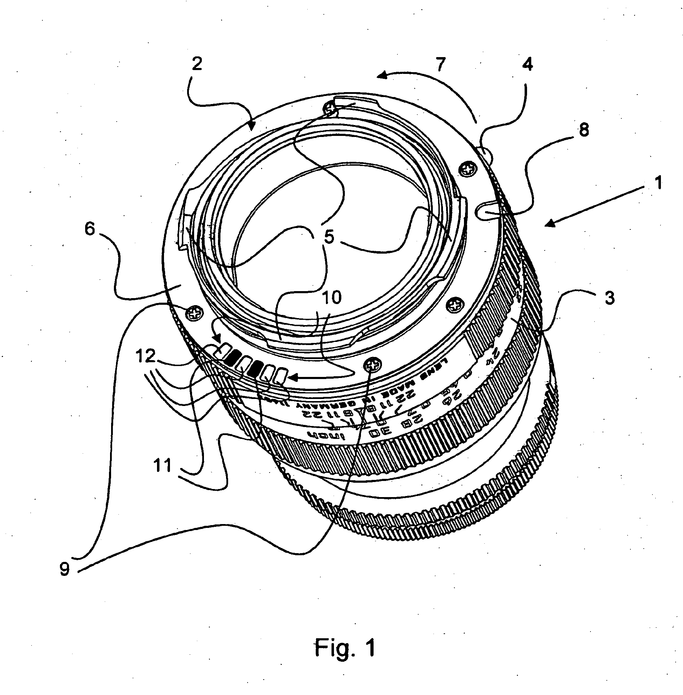

Das in Fig. 1 in einer schrägen Ansicht dargestellte Wechselobjektiv 1 mit einer Anriegelungsvorrichtung 2 für eine nicht weiter dargestellte Systemkamera mit Bajonettaufnahme weist an seinem Objektivgehäuse 3 an dem zur Kamera weisenden Ende eine Orientierungsmarkierung 4 auf. Zum drehrichtigen Aufsetzen der Anriegelungsvorrichtung 2 auf die Systemkamera wird diese Orientierungsmarkierung 4 mit einer ebensolchen korrespondierenden Markierung an der Systemkamera in Übereinstimmung gebracht. Beim Aufsetzen des Wechselobjektivs 1 werden vier an der Anriegelungsvorrichtung 2 angeformte Bajonettlappen 5 durch korrespondierende Ausnehmungen in der Bajonettaufnahme der Systemkamera hindurchgeführt, bis die Auflagefläche 6 der Anriegelungsvorrichtung 2 mit der Bajonettaufnahme in Berührung steht. Die Anriegelung erfolgt anschließend durch Drehen des Wechselobjektivs 1 in einer mit Hilfe eines Pfeils 7 dargestellten Drehrichtung, bis eine Rastvorrichtung an der Bajonettaufnahme der Systemkamera in eine Rastvertiefung 8 der Anriegelungsvorrichtung 2 einrastet. Die Rastvertiefung 8 ist entgegen der Drehrichtung beabstandet von der Orientierungsmarkierung 4 auf der Auflagefläche 6 der Anriegelungsvorrichtung 2 angeordnet. Auf der Auflagefläche 6 befinden sich weiter entgegen der Drehrichtung 7 beabstandet zur Rastvertiefung 8 zwischen zwei Befestigungsschrauben 9 sechs getrennt nebeneinander liegende Flächenbereiche 10. Zwei lichtabsorbierende Flächenbereiche 11 sind schwarz und 4 lichtreflektierende Flächenbereiche 12 sind hell dargestellt. Die Flächenbereiche 10 liegen in einem Winkelsegment von vorzugsweise 110° bis 150° von der Rastvertiefung 8 entfernt.

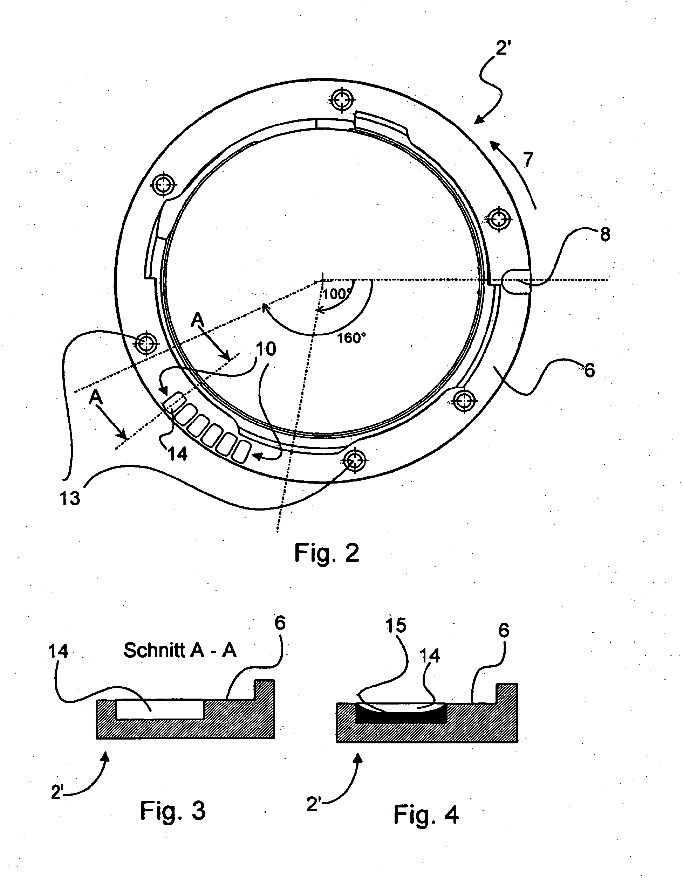

Fig. 2 zeigt eine Aufsicht auf eine nicht an einem Objektiv befestigte und für einen Austausch vorgesehene Anriegelungsvorrichtung 2'. In dieser Aufsicht ist deutlich die zur Seite hin offene Rastvertiefung 8 in der Auflagefläche 6 zu sehen. Zwischen zwei Schraublöchern 13 befinden sich detektierbare Flächenbereiche 10. Die Flächenbereiche : 10 sind zur Anfertigung individueller Codierungen vorbereitet und als Vertiefungen (s. dazu auch Fig. 3) ausgebildet. Das zwischen den Schraublöchern 13 liegende und für die Anbringung der Flächenbereiche 10 nutzbare Winkelsegment beträgt etwa 100° bis 160°.

Fig. 3 zeigt einen Schnitt A - A durch eine einzelne Vertiefung 14 in einem der Flächenbereiche 10 der Anriegelvorrichtung 2' aus Fig. 2. Die Vertiefung 14 ist schematisch im Verhältnis zur Auflagefläche 6 dargestellt und kann in Realität selbstverständliche auch flacher sein.

Als Beispiel für eine Möglichkeit der Herstellung einer individuellen Codierung ist in Fig. 4 die in Fig. 3 als Schnitt A - A dargestellte Vertiefung 14 in der Anriegelvorrichtung 2' mit einem lichtabsorbierenden, schwarz dargestellten Lack 15 ausgelegt. Der Lack 15 ragt in seinem Randbereich an die Höhe der Auflagefläche 6 heran, liegt aber gut geschützt vor Abrieb eingebettet in der Vertiefung 14.

### Bezugszeichenliste

- 1: Wechselobjektiv
- 2,2': Anriegelvorrichtung
- 3: Objektivgehäuse
- 4: Orientierungsmarkierung
- 5: Bajonettlappen
- 6: Auflagefläche
- 7: Drehrichtung
- 8: Rastvertiefung
- 9: Befestigungsschrauben
- 10: detektierbare Flächenbereiche
- 11: lichtabsorbierende Flächenbereiche
- 12: lichtreflektierende Flächenbereiche
- 13: Schraublöcher
- 14: Vertiefung
- 15: schwarzer Lack

## Patentansprüche

1. Wechselobjektiv (1) mit Anriegelvorrichtung (2, 2') für Systemkameras, wobei an dem zur Kamera weisenden Ende des Objektivgehäuses (3) eine Orientierungsmarkierung (4) zum Aufsetzen der Anriegelvorrichtung (2, 2') auf die Kamera vorgesehen ist und beabstandet zur Orientierungsmarkierung (4) entgegen der Drehrichtung (7) der Anriegelung die Auflagefläche (6) der Anriegelvorrichtung (2, 2') eine Rastvertiefung (8) aufweist, **dadurch gekennzeichnet, dass** die Auflagefläche (6) entgegen der Drehrichtung (7) beabstandet zur Rastvertiefung (8) in einem Winkelsegment von 100° bis 160°, vorzugsweise 110° bis 150°, mindestens zwei, vorzugsweise sechs, getrennt nebeneinander liegende, optisch einzeln detektierbare, gleich große und zueinander gleich beabstandete Flächenbereiche (10) enthält.

2. Wechselobjektiv (1) nach Anspruch 1, **dadurch gekennzeichnet, dass** die Flächenbereiche (10) eine lichtreflektierende (12) oder eine lichtabsorbierende (11) Beschichtung aufweisen.

3. Wechselobjektiv (1) nach Anspruch 2, **dadurch gekennzeichnet, dass** die Beschichtung aus einer hellen (12) oder dunklen (11) Chromauflage besteht.

4. Wechselobjektiv (1) nach Anspruch 2, **dadurch gekennzeichnet, dass** die Beschichtung aus einer hellen (12) oder dunklen (11) Lackschicht besteht.

5. Wechselobjektiv (1) nach Anspruch 2, **dadurch gekennzeichnet, dass** lichtabsorbierende Flächenbereich (11), durch Einbrennerhitzung mittels Lasergravur, durch chemisches Ätzen oder Sandstrahlen hergestellt sind.

6. Wechselobjektiv (1) nach Anspruch 1, **dadurch gekennzeichnet, dass** die Flächenbereiche (10) als Vertiefungen (14) in der Auflagefläche (6) ausgebildet sind.

7. Wechselobjektiv (1) nach Anspruch 6, **dadurch gekennzeichnet, dass** die Vertiefungen (14) durch Lasergravur oder Fräsen hergestellt sind und eine lichtreflektierende (12) oder lichtabsorbierende (11) Eigenschaft aufweisen.

8. Wechselobjektiv (1) nach Anspruch 7, **dadurch gekennzeichnet, dass** die lichtabsorbierende (11) Eigenschaft der Vertiefungen (14) nachträglich durch Einbringen von lichtabsorbierendem Lack (15) hergestellt sind.

9. Verwendung der Flächenbereiche (10) in der Auflagefläche (6) der Anriegelvorrichtung (2, 2') eines Wechselobjektivs nach einem der Ansprüche 1 bis 8 zur Codierung von Objektivgrunddaten, wie Brennweite und Öffnungsverhältnis, und / oder Objektiv-Individualdaten, wie besonderen Korrekturwerten.

## Claims

1. Interchangeable lens (1) with a locking device (2, 2') for system cameras, wherein an orientation marking (4) for mounting the locking device (2, 2') on the camera is provided at the end of the lens housing (3) facing the camera, and the contact surface (6) of the locking device (2, 2') has a latching depression (8) at a distance from the orientation marking (4) counter to the direction (7) of rotation of the locking operation, **characterized in that** the contact surface (6) contains at least two, preferably six, surface areas (10) which are of equal size, equidistant from one another, situated next to one another in an isolated fashion at a distance from the latching depression (8) counter to the direction (7) of rotation within an angle segment of from 100° to 160°, preferably 110° to 150°, and can be detected individually by optical means.

2. Interchangeable lens (1) according to Claim 1, **characterized in that** the surface areas (10) have a light-reflective coating (12) or a light-absorbing coating (11).

3. Interchangeable lens (1) according to Claim 2, **characterized in that** the coating comprises a light chrome coating (12) or a dark chrome coating (11).

4. Interchangeable lens (1) according to Claim 2, **characterized in that** the coating is composed of a light lacquer layer (12) or a dark lacquer layer (11).

5. Interchangeable lens (1) according to Claim 2, **characterized in that** light-absorbing surface areas (11) are produced by baking heating by means of laser engraving, by chemical etching or sand blasting.

6. Interchangeable lens (1) according to Claim 1, **characterized in that** the surface areas (10) are in the form of depressions (14) in the contact surface (6).

7. Interchangeable lens (1) according to Claim 6, **characterized in that** the depressions (14) are produced by laser engraving or milling and have a light-reflective characteristic (12) or a light-absorbing characteristic (11).

8. Interchangeable lens (1) according to Claim 7, **characterized in that** the light-absorbing characteristic (11) of the depressions (14) is produced subsequently by introducing light-absorbing lacquer (15).

9. Use of the surface areas (10) in the contact surface (6) of the locking device (2, 2') of an interchangeable lens according to one of Claims 1 to 8 for encoding basic lens data, such as focal length and aperture ratio, and/or individual lens data, such as special correction values.

## Revendications

1. Objectif interchangeable (1) avec dispositif de verrouillage (2, 2') pour des appareils photos modulaires, un repère d'orientation (4) destiné à la pose du dispositif de verrouillage (2, 2') sur l'appareil photo étant prévu sur l'extrémité du boîtier d'objectif (3) qui fait face à l'appareil photo et la surface d'appui (6) du dispositif de verrouillage (2, 2') présentant un enfoncement d'enclenchement (8) espacé du repère d'orientation (4) à l'opposé du sens de rotation (7) du verrouillage, **caractérisé en ce que** la surface d'appui (6) comprend au moins deux, de préférence six zones de surface (10) disposées isolément l'une à côté de l'autre, pouvant être détectées individuellement de manière optique, de même taille et présentant le même écart entre elles, espacées de l'enfoncement d'enclenchement (8) à l'opposé du sens de rotation (7) dans un segment angulaire de 100° à 160°, de préférence de 110° à 150°.

2. Objectif interchangeable (1) selon la revendication 1, **caractérisé en ce que** les zones de surface (10) présentent un revêtement réfléchissant la lumière (12) ou absorbant la lumière (11).

3. Objectif interchangeable (1) selon la revendication 2, **caractérisé en ce que** le revêtement se compose d'une couche de chrome claire (12) ou foncée (11).

4. Objectif interchangeable (1) selon la revendication 2, **caractérisé en ce que** le revêtement se compose d'une couche de vernis clair (12) ou foncé (11).

5. Objectif interchangeable (1) selon la revendication 2, **caractérisé en ce que** les zones de surface absorbant la lumière (11) sont fabriquées par chauffage au four au moyen d'une gravure au laser, par corrosion chimique ou par sablage.

6. Objectif interchangeable (1) selon la revendication 1, **caractérisé en ce que** les zones de surface (10) sont réalisées sous la forme d'enfoncements (14) dans la surface d'appui (6).

7. Objectif interchangeable (1) selon la revendication 6, **caractérisé en ce que** les enfoncements (14) sont réalisés par gravure au laser ou par fraisage et présentent une propriété de réflexion de la lumière (12) ou d'absorption de la lumière (11).

8. Objectif interchangeable (1) selon la revendication 7, **caractérisé en ce que** la propriété d'absorption de la lumière (11) des enfoncements (14) est réalisée ultérieurement en introduisant un vernis absorbant la lumière (15).

9. Utilisation des zones de surface (10) dans la surface d'appui (6) du dispositif de verrouillage (2, 2') d'un objectif interchangeable selon l'une des revendications 1 à 8 pour coder des données de base de l'objectif telles que la distance focale et le rapport d'ouverture et/ou des données individuelles de l'objectif, telles que des valeurs de correction particulières.
